# EUROPEAN PATENT APPLICATION

(11) **EP 2 648 019 A2**
(43) Date of publication of application: **09.10.2013**
(21) Application number: 13161764.9
(22) Date of filing: 28.03.2013
(51) Int. Cl.: G01T 1/24

(54) **Radiation imaging apparatus, radiation imaging system, and control method for the radiation imaging apparatus**

(30) Priority: 04.04.2012 JP 2012085498
(71) Applicant: CANON KABUSHIKI KAISHA, Ohta-ku Tokyo 146-8501 (JP)
(72) Inventor: Yagi, Tomoyuki, Ohta-ku Tokyo (JP); Kameshima, Toshio, Ohta-ku Tokyo (JP); Takenaka, Katsuro, Ohta-ku Tokyo (JP); Sato, Sho, Ohta-ku Tokyo (JP); Iwashita, Atsushi, Ohta-ku Tokyo (JP); Sugawara, Eriko, Ohta-ku Tokyo (JP); Okada, Hideyuki, Ohta-ku Tokyo (JP)
(74) Representative: Derham, Cassandra Virginie

(57) **Abstract**

A radiation imaging apparatus includes a pixel array (101) including a plurality of pixels (110) arranged in a matrix in which each pixel includes a conversion element (S) arranged to convert radiation into a charge and a switch element (T) arranged to transfer an electric signal based on the charge, a bias wiring (Vs) that supplies the conversion element with a voltage for the conversion element to convert the radiation into the charge, a power supply unit (107) arranged to supply the voltage to the bias wiring; and a detecting unit arranged to detect start of radiation irradiation to the pixel array, in which the detecting unit includes a detecting circuit (108a) arranged to detect the radiation irradiation start to the pixel array on the basis of a comparison result through computation on at least two currents flowing through at least two bias wirings among the plurality of bias wirings.

## Description

### BACKGROUND OF THE INVENTION

### Field of the Invention

The present invention relates to a radiation imaging apparatus and system used for a medical diagnosis and an industrial non-destructive test, and a control method for the radiation imaging apparatus. The invention particularly relates to a radiation imaging apparatus and system with which it is possible to detect the presence or absence of radiation irradiation such as start or end of radiation irradiation from a radiation generation apparatus, and a control method for the radiation imaging apparatus.

### Description of the Related Art

A radiation imaging apparatus using a flat panel detector (which will be abbreviated as FPD) performs an imaging operation in synchronism with radiation irradiation by a radiation generation apparatus. As proposed in International Publication No. WO 2000/06582, the following technique may be used as a technique for this synchronization. A current that flows through bias wiring where bias is supplied to a conversion element is detected while a conductive state and a non-conductive state of a switch element are switched to detect the radiation irradiation by the radiation generation apparatus. An operation of the radiation imaging apparatus is controlled in accordance with a result of the detecting. According to this synchronization technique, as proposed in Japanese Patent Laid-Open No. 2010-268171, a problem may occur that noise generated at the time of switching the conductive state and the non-conductive state of the switch element affects the current that flows through the wiring where the bias is supplied to the conversion element to decrease an accuracy of the detecting. To reduce the influence of this noise, Japanese Patent Laid-Open No. 2010-268171 describes the following suggestions. A first suggestion is to provide a filter circuit between a current detecting unit and the bias wiring. A second suggestion is to provide a sample and hold circuit to an output terminal of the current detecting unit and perform processing of interrupting sample and hold at a timing of switching the conductive state and the non-conductive state of the switch element. A third suggestion is to perform differential processing of a noise waveform previously obtained and stored in a storage unit from the noise-affected current.
A fourth suggestion is to align a timing of supplying the switch element with a non-conductive voltage for setting the switch element as the non-conductive state on a certain row with a timing of supplying the switch element with a conductive voltage for setting the switch element as the conductive state on another row to cancel the noise.

However, to detect the presence or absence of the radiation irradiation with a still higher instantaneousness and also at a high accuracy, the suggestions of Japanese Patent Laid-Open No. 2010-268171 are insufficient. According to the first suggestion, a problem of the detecting instantaneousness occurs since a band limitation of the filter circuit is set in accordance with a timing of the switching timing, and a delay is increased. According to the second suggestion, the problem of the detecting instantaneousness occurs since the detecting is not conducted until a resumption of the sample and hold in a case where the radiation irradiation is started during the interruption of the sample and hold. According to the third and fourth suggestions, a problem of the detecting accuracy occurs since variations in resistances and capacitances of wirings in a pixel array and variations in characteristics and performances of the switch elements cause variations in noise waveforms in a pixel array, and it is difficult to sufficiently reduce the noise influence.

### SUMMARY OF THE INVENTION

The present invention in its first aspect provides a radiation imaging apparatus as specified in claims 1 to 9.

The present invention in its second aspect provides a radiation imaging system as specified in claim 10.

The present invention in its third aspect provides a control method for the radiation imaging apparatus as specified in claims 11 to 13.

According to the aspects of the present invention, it is possible to provide the radiation imaging apparatus that may detect the presence or absence of the radiation irradiation with a high instantaneousness and also at a high accuracy.

Further features of the present invention will become apparent from the following description of exemplary embodiments with reference to the attached drawings.

### BRIEF DESCRIPTION OF THE DRAWINGS

Fig. 1A is a schematic diagram of a radiation imaging apparatus and system, and Fig. 1B is a schematic equivalent circuit diagram of a radiation imaging apparatus for one pixel according to a first exemplary embodiment.

Fig. 2A and Fig. 2B are schematic equivalent circuit diagrams of the radiation imaging apparatus according to the first exemplary embodiment.

Fig. 3 is a schematic equivalent circuit diagram of a detection circuit and a detecting circuit.

Figs. 4A and 4B are timing charts for the radiation imaging apparatus according to the first exemplary embodiment.

Fig. 5A, Fig. 5B, and Fig. 5C are timing charts for the radiation imaging apparatus.

Fig. 6A and Fig. 6B are schematic equivalent circuit diagrams of another radiation imaging apparatus according to the first exemplary embodiment.

Fig. 7A and Fig. 7B are schematic equivalent circuit diagrams of another radiation imaging apparatus according to the first exemplary embodiment.

Fig. 8 is a schematic equivalent circuit diagram of another radiation imaging apparatus according to the first exemplary embodiment.

Fig. 9A and Fig. 9B are schematic diagrams of a radiation imaging apparatus according to a second exemplary embodiment.

Fig. 10 is a schematic diagram of the radiation imaging apparatus according to the second exemplary embodiment.

### DESCRIPTION OF THE EMBODIMENTS

Hereinafter, exemplary embodiments of the present invention will be described with reference to the drawings. Radiation in the present invention includes alpha rays, beta rays, gamma rays, and the like corresponding to beams made of particles (including photons) released from radiation decay as well as beam having comparable energy or above such as X-rays, particle rays, and cosmic rays. First Exemplary Embodiment

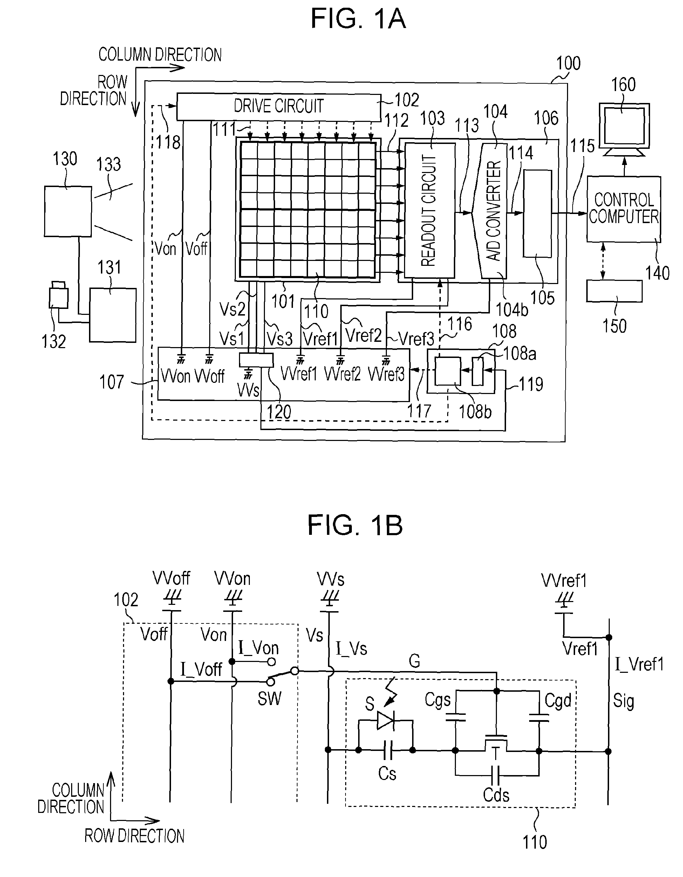

A concept of the present invention will be described by using Fig. 1B. Fig. 1B illustrates a schematic equivalent circuit of one pixel in a pixel array provided with plural pixels in a matrix according to a first exemplary embodiment of the present invention. The pixel array herein refers to an area including an area where plural pixels are arranged and an area between the plural pixels on a substrate where the plural pixels are arranged in a matrix. One pixel 110 illustrated in Fig. 1B includes a conversion element S that is provided with a semiconductor layer between two electrodes and configured to convert radiation into a charge and a switch element T configured to transfer an electric signal in accordance with the charge. An indirect-type conversion element provided with a photoelectric conversion element and a wavelength conversion body configured to convert radiation into light in a spectrum band that may be detected by the photoelectric conversion element or a direct-type conversion element configured to directly convert radiation into a charge is preferably used for the conversion element S. According to the present exemplary embodiment, a PIN-type photo diode that is arranged on an insulating substrate such as a glass substrate and contains amorphous silicon as a main material is used for a photo diode as one type of the photoelectric conversion element. The conversion element S herein has a capacity, and the capacity of the conversion element S is denoted by Cs. A transistor including a control terminal and two main terminals is preferably used for the switch element T, and according to the present exemplary embodiment, a thin film transistor (TFT) is used. One electrode (first electrode) of the conversion element S is electrically connected to one of the two main terminals of the switch element T, and the other electrode (second electrode) is electrically connected to a bias power supply VVs for supplying a bias voltage via a bias wiring Vs. A control terminal of the switch element T configured to transfer an electric signal in accordance with a potential at the first electrode of the conversion element S is connected to a drive wiring G, and drive signals including a conductive voltage for setting the switch element T as a conductive state and a non-conductive voltage for setting the switch element T as a non-conductive state are supplied from a drive circuit 102 via the drive wiring G. According to the present exemplary embodiment, one main terminal of the switch element T is connected to the first electrode of the conversion element S, and the other main terminal is connected to a signal wiring Sig. While the control terminal is supplied with the conductive voltage to set the switch element T in the conductive state, the switch element T transfers the electric signal in accordance with the potential at the first electrode which varies in accordance with the charge generated in the conversion element S to the signal wiring Sig. The switch element T has a capacity between the control terminal and the one main terminal, and the capacity is denoted as Cgd. The switch element T also has a capacity between the control terminal and the other main terminal, and the capacity is denoted as Cgs. The switch element T further has a capacity between the two terminals, and the capacity is denoted as Cds. The signal wiring Sig is connected to a reference power supply VVref1 via a reference voltage wiring Vref1 for supplying a reference voltage to a readout circuit 103 which will be described below. The drive wiring G is selectively connected, through a switch SW provided on the drive circuit 102, to a conductive power supply VVon via a conductive voltage wiring Von for supplying the conductive voltage and a non-conductive power supply VVoff via a non-conductive voltage wiring Voff for supplying the non-conductive voltage.

A current that flows when the conversion element S is irradiated with radiation will be described. A case in which the switch element T is in the non-conductive state and the conversion element S is irradiated with the radiation will be described. Currents flow through the respective wirings in accordance with the generate electron-hole pair, the capacity Cs of the conversion element S, and the respective capacities (Cgs, Cgd, and Cds) of the switch element T. The potential at the first electrode of the conversion element S decreases in accordance with the generated charge. Thus, a non-conductive power supply current I_Voff flows as a drive wiring current I_Vg from the non-conductive power supply VVoff towards the pixel 110 through the drive wiring G in accordance with a decreased amount of the potential at the first electrode and a capacity division ratio from the conversion element S to the drive wiring G. A signal wiring current I_Vref1 flows from the reference power supply VVref1 towards the pixel 110 through the signal wiring Sig in accordance with a decreased amount of the potential at the first electrode and a capacity division ratio from the conversion element to the signal wiring Sig. A bias wiring current I_Vs equivalent to a sum of the drive wiring current I_Vg flows towards the pixel and the signal wiring current I_Vref1 flows from the pixel 110 towards the bias power supply VVs so that a potential difference of the capacity Cs of the conversion element S is maintained through the bias wiring Vs. A case in which the switch element T is in the conductive state and the conversion element S is irradiated with the radiation will be described. The bias wiring current I_Vs flows from the pixel 110 towards the bias power supply VVs through the bias wiring Vs in accordance with the generated hole. The signal wiring current I_Vref1 corresponding to a value obtained by dividing the bias wiring current I_Vs by a product of the capacity Cs of the conversion element S and an "on" resistance value Ron of the switch element T flows from the reference power supply VVref1 towards the pixel 110 through the signal wiring Sig. Thus, the bias wiring current I_Vs in accordance with the radiation emitted in a case where the conversion element S is irradiated with the radiation flows through the bias wiring Vs.

A current that flows when the conductive state and the non-conductive state of the switch element T are switched will be described. A current that flows when the non-conductive state of the switch element T is switched to the conductive state will be described first. The conductive power supply current I_Von flows from the conductive power supply VVon towards the pixel 110 as the drive wiring current I_Vg through the drive wiring G to compensate a potential fluctuation amount between the non-conductive voltage and the conductive voltage. The bias wiring Vs has a capacity coupling via the capacity Cs of the conversion element S and the capacity Cgd between the control terminal of the switch element T and the one main terminal. For that reason, the bias wiring current I_Vs flows from the pixel 110 towards the bias power supply VVs through the bias wiring Vs in accordance with a potential fluctuation amount of the driving wiring G and a capacity division ratio from the driving wiring G to the bias wiring Vs. A current that flows when the conductive state of the switch element T is switched to the non-conductive state will be described next. The non-conductive power supply current I_Voff flows from the pixel 110 towards the non-conductive power supply VVoff as the drive wiring current I_Vg to cancel the potential fluctuation amount between the conductive voltage and the non-conductive voltage. The bias wiring current I_Vs flows from the bias power supply VVs towards the pixel 110 through the bias wiring Vs in accordance with a potential fluctuation amount of the driving wiring G and a capacity division ratio from the driving wiring G to the bias wiring Vs. Thus, when the conductive state and the non-conductive state of the switch element T are switched, the bias wiring current I_Vs in accordance with a potential difference between the conductive voltage and the non-conductive voltage flows through the bias wiring Vs irrespective of the radiation irradiation. This current exerts an influence as noise and decreases an accuracy for the detecting of the radiation irradiation. In view of the above, the inventor of the present application finds out the following as a result of earnest examinations.

The pixel array is not uniformly irradiated with the radiation emitted and transmitted through a subject in many cases because of the existence of the subject. For that reason, when the plural pixels 101 arranged in the pixel array are divided into plural pixel groups, the intensities of the radiations emitted to the respective pixel groups vary in many cases. Among the plural pixel groups, in a pixel group irradiated with the radiation transmitted though a region having a high radiation absorption such as a bone or an organ, for example, an output electric signal is extremely low, and an electric signal at almost the same level as a dark time output signal is output. On the other hand, among the plural pixel groups, in another pixel group irradiated with the radiation that is not transmitted though the subject, an output electric signal is extremely high, and a highest electric signal where the conversion element S may perform the most conversion. Thus, when the plural bias wirings are provided to correspond to the respective pixel groups on a one-on-one basis, the bias wiring current I_Vs flowing through one bias wiring corresponds to the electric signal having the highest sensitivity, and the bias wiring current I_Vs flowing through the other bias wiring corresponds to the electric signal at almost the same level as the dark time output signal. It is noted that this bias wiring current I_Vs depends also on the capacity coupled to the bias wiring.

On the other hand, the potential differences between the conductive voltages and the non-conductive voltages supplied to the switch elements T of the respective pixels via the driving wiring G have some variation for the respective pixel groups, but the variations are negligible as compared with the intensities of the radiations emitted to the respective pixel groups. When the plural bias wirings are provided to correspond to the respective pixel groups on the one-on-one basis, the bias wiring current I_Vs in accordance with the potential difference between the conductive voltage and the non-conductive voltage flowing on one bias wiring only depends on the capacity coupled to the bias wiring.

In view of the above, at least two bias wiring currents flowing through at least two bias wirings among the plural bias wirings are detected, and the start of the radiation irradiation to the pixel array is detected on the basis of the at least two bias wiring currents. Even when computation processing is conducted on the two bias wiring currents so that the component in accordance with the potential difference between the conductive voltage and the non-conductive voltage included in the two bias wiring currents is suppressed, the components in accordance with the intensities of the emitted radiation included in the two bias wiring currents are largely different from each other in the computation processing. For that reason, a sufficient amount of the component in accordance with the intensity of the radiation remains. That is, the influence of the noise caused by the current based on the potential difference between the conductive voltage and the non-conductive voltage is suppressed by detecting the start of the radiation irradiation to the pixel array on the basis of at least two bias wiring currents. Thus, it is possible to detect the presence or absence of the radiation irradiation such as the start or end of the radiation irradiation based on the bias wiring currents at a satisfactory accuracy.

According to the embodiment of the present invention, the computation is preferably conducted by using at least two bias wiring currents, and the detection on the presence or absence of the radiation irradiation is preferably conducted on the basis of the computation result. For the computation, subtraction processing is conducted after at least one of the at least two bias wiring currents is multiplied by a wanted coefficient so that the component in accordance with the potential difference between the conductive voltage and the non-conductive voltage included in the computation result is below a predetermined threshold. Thus, the influence of the noise caused by the current based on the potential difference between the conductive voltage and the non-conductive voltage is suppressed, and it is possible to detect the radiation irradiation based on the bias wiring currents at a satisfactory accuracy. The predetermined threshold and the wanted coefficient herein may be appropriately set when calibration is carried out at the time of the fabrication or factory shipment of the radiation imaging apparatus or after the installation.

A radiation imaging system and a radiation imaging according to the exemplary embodiment of the present invention will be described next by using Fig. 1A. A radiation imaging apparatus 100 includes the pixel array 101 where the plural pixels 110 are arranged in the pixel, the drive circuit 102 configured to drive the pixel array 101, and a signal processing unit 106 including the readout circuit 103 configured to read out the image signal based on the electric signal from the driven pixel array 101.
The signal processing unit 106 includes the readout circuit 103, an A/D converter 104, and a digital signal processing unit 105. According to the present exemplary embodiment, to simplify the description, the pixel array 101 includes the pixels 110 arranged in eight rows and eight columns. The pixel array 101 is driven in accordance with a drive signal 111 from the drive circuit 102, and electric signals 112 are output in parallel from the pixel array 101. The electric signal 112 output from the pixel array 101 is read out by the readout circuit 103. An electric signal 113 from the readout circuit 103 is converted from an analog signal to a digital signal 114 by the A/D converter 104. The digital signal from the A/D converter 104 is subjected to simple digital signal processing such as digital multiplex processing or offset correction by the digital signal processing unit 105, and a digital image signal is output. The radiation imaging apparatus 100 includes a power supply unit 107 and a control unit 108 configured to supply control signals to the respective components to control operations. The power supply unit 107 includes a first reference power supply VVref1 that supplies the reference voltage to the readout circuit 103 via the reference voltage wiring Vref1 and a second reference power supply VVref2 that supplies the reference voltage via a reference voltage wiring Vref2. The power supply unit 107 includes a third reference power supply VVref3 that supplies the reference voltage to the A/D converter 104 via a reference voltage wiring Vref3. The power supply unit 107 also includes the conductive power supply VVon for supplying the conductive voltage to the drive circuit 102 via the conductive voltage wiring Von and the non-conductive power supply VVoff for supplying the non-conductive voltage via the non-conductive voltage wiring Voff. The power supply unit 107 further includes the bias power supply VVs for supplying the bias voltage. The control unit 108 controls the drive circuit 102, the readout circuit 103, and the power supply unit 107. The power supply unit 107 herein includes a current detection circuit 120 configured to detect currents flowing through plural wirings arranged in the pixel array 101. The current detection circuit 120 according to the present exemplary embodiment detects at least two currents among a current flowing through the first bias wiring Vs1, a current flowing through a second bias wiring Vs2, and a current flowing through a third bias wiring Vs3. For that reason, the current detection circuit 120 according to the present exemplary embodiment may detect at least two currents among the currents flowing through the plural bias wirings. In the pixel array 101 herein, the plural pixels 110 are divided into the plural pixel groups to be arranged, and the first bias wiring Vs1 to the third bias wiring Vs3 are provided to the plural pixel groups on the one-on-one basis. The control unit 108 includes a detecting circuit 108a configured to detect the presence or absence of radiation irradiation to the pixel array 101 on the basis of the current detected by the current detection circuit 120 and a control circuit 108b configured to control the drive circuit 102 on the basis of the detecting result of the detecting circuit 108a. A detecting unit according to the exemplary embodiment of the present invention includes the current detection circuit 120 and the control circuit 108b and detects the presence or absence of radiation irradiation to the pixel array 101. The detecting unit will be described in detail below.

A radiation control apparatus 131 performs a control on an operation for a radiation generation apparatus 130 to emit radiation 133 in response to a control signal from an exposure button 132. A control console 150 inputs information on a subject and an imaging condition to a control computer 140 to be transmitted to the control computer 140. A display apparatus 163 displays image data subjected to image processing by the control computer 140 that has received the image data from the radiation imaging apparatus 100.

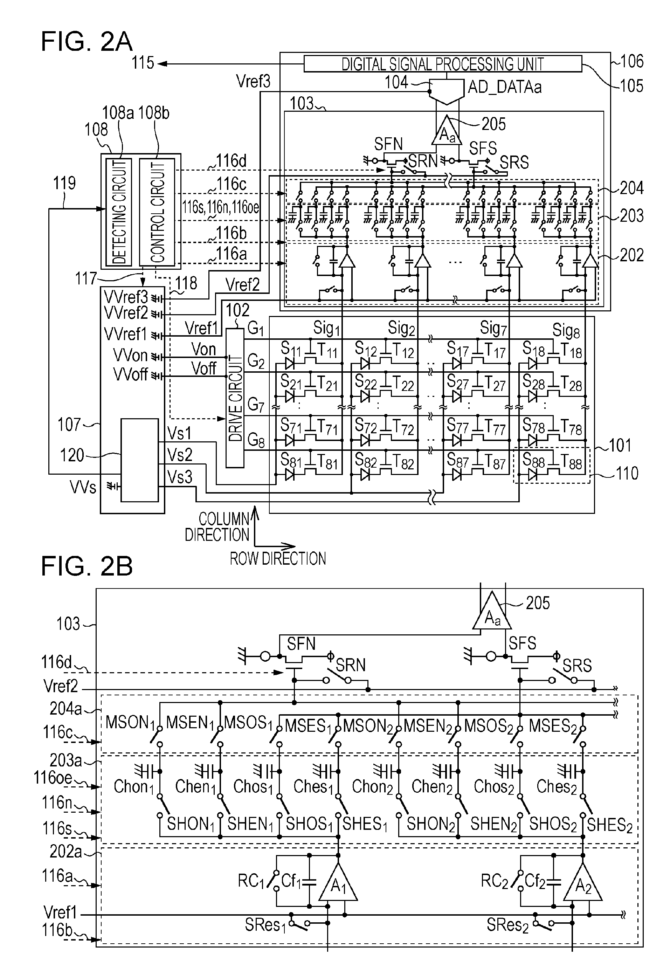

A radiation imaging apparatus according to the present exemplary embodiment will be described next by using Fig. 2A and Fig. 2B. Fig. 2A is a schematic equivalent circuit diagram of the radiation imaging apparatus according to the present exemplary embodiment, and Fig. 2B is a schematic equivalent circuit diagram of the readout circuit 103. Configurations that are same as the configurations described by using Fig. 1A and Fig. 1B are assigned by the same reference signs, and a detailed description thereof will be omitted. According to the present exemplary embodiment, to simplify the description, the description has been given while the pixel array 101 is composed of eight rows and eight columns, but the embodiment of the present invention is not limited to this. In the case of the radiation imaging apparatus designed to pick up an image of a human chest region, the pixel array occupies appropriately 43 cm × 35 cm. When a size of one pixel is set as 160 µm × 160 µm, the pixel array composed of 2688 rows × 2100 columns is used.

As illustrated in Fig. 2A, according to the present exemplary embodiment, the plural pixels 110 arranged in the pixel array 101 are divided into three pixel groups. A first pixel group includes the plural pixels 110 including the conversion elements S where the first bias wiring Vs1 is connected to the second electrode. A second pixel group includes the plural pixels 110 including the conversion elements S where the second bias wiring Vs2 is connected to the second electrode. A third pixel group includes the plural pixels 110 including the conversion elements S where the third bias wiring Vs3 is connected to the second electrode.

In the switch elements of the plural pixels in the row direction, for example, which are denoted by T₁₁ to T₁₈, the control terminals thereof are commonly electrically connected to the driving wiring G₁ on the first row, and the drive signals from the drive circuit 102 are provided in units of row via the drive wiring G₁. In the switch elements of the plural pixels in the column direction, for example, which are denoted by T11 to T81, the other main terminals thereof are electrically connected to the signal wiring Sig₁ on the first column. While the conductive state is established, the electric signal in accordance with the charge of the conversion element S is transferred to the readout circuit 103 via the signal wiring Sig. The electric signals output from the plural pixels 110 in the pixel array 101 are transmitted in parallel to the readout circuit 103 through the plural signal wirings Sig₁ to Sig₈ arranged in the column direction.

The readout circuit 103 includes an amplification circuit unit 202 configured to amplify the electric signals output in parallel from the pixel array 101 and a sample and hold circuit unit 203 that samples and holds the electric signals from the amplification circuit unit 202. The amplification circuit unit 202 includes amplification circuits including an operational amplifier A configured to amplify and output the read electric signal, an integral capacity group Cf, and a reset switch RC configured to reset the integral capacity while corresponding to the respective signal wirings Sig. The output electric signal is input to an inverting input terminal of the operational amplifier A, and the amplified electric signal is output from an output terminal. The reference voltage wiring Vref1 is herein connected to a non-inverting input terminal of the operational amplifier A. The amplification circuit unit 202 is provided with a signal wiring reset switch SRes configured to connect the reference voltage wiring Vref1 to the signal wiring Sig until the start of the radiation irradiation is detected. Until the start of the radiation irradiation is detected, the power consumption is increased when the operational amplifier A is operated, and therefore the operation by the operational amplifier A is stopped.
To fix the voltage of the signal wiring Sig to the reference voltage and also detect (monitor) the current flowing through the signal wiring Sig, the signal wiring reset switch SRes connects the reference voltage wiring Vref1 to the signal wiring Sig. The sample and hold circuit unit 203 includes four systems of a sample and hold circuit composed of a sampling switch SH and a sampling capacity Ch while corresponding to the respective amplification circuits. This is because correlated double sampling (CDS) processing of suppressing the offset generated in the amplification circuit is conducted while corresponding to the electric signals for two rows. The readout circuit 103 includes a multiplexer 204 configured to sequentially output the electric signals read out in parallel from the sample and hold circuit unit 203 as image signals in the form of serial signals. The readout circuit 103 further includes an output buffer circuit SF configured to perform impedance conversion on the image signal to be output, an input reset switch SR configured to reset an input of the output buffer circuit SF, and a variable amplifier 205. The multiplexer 204 is herein provided with switches MS1 to MS8 and switches MN1 to MN8 while corresponding to the respective signal wirings, and the operation of converting the parallel signals to the serial signals is conducted by sequentially selecting the switches. A fully-differential amplifier is preferably used as a differential amplifier for the CDS processing for the variable amplifier 205. The signals converted into the serial signals are input to the A/D converter 104 and converted into digital data by the A/D converter 104, and the digital data is sent to the digital signal processing unit 105. A control circuit 108b herein supplies a control signal 116a to the reset switch RC of the amplification circuit unit 202 and supplies a control signal 116b to the signal wiring reset switch SRes. The control circuit 108b also supplies an even-odd selection signal 116oe, a signal sample control signal 116s, and an offset sample control signal 116n to the sample and hold circuit unit 203. The control circuit 108b further supplies a control signal 116c to the multiplexer 204 and supplies a control signal 116d to the input reset switch SR.

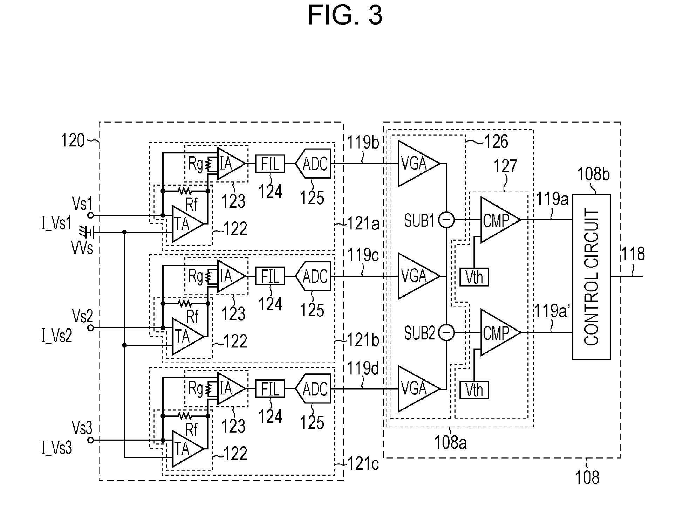

Examples of the current detection circuit 120 and the detecting circuit 108a according to the present exemplary embodiment will be described by using Fig. 3.

The current detection circuit 120 according to the present exemplary embodiment includes plural bias wiring current detection mechanisms. According to the present exemplary embodiment, the current detection circuit 120 includes a first bias wiring current detection mechanism 121a, a second bias wiring current detection mechanism 121b, and a third bias wiring current detection mechanism 121c. The first bias wiring current detection mechanism 121a is configured to detect a first bias wiring current I_Vs1 and output a first bias wiring current signal 119b. The second bias wiring current detection mechanism 121b is configured to detect a second bias wiring current I_Vs2 and output a second bias wiring current signal 119c. The third bias wiring current detection mechanism 121c is configured to detect a third bias wiring current I_Vs3 and output a conductive power supply current signal 119d. According to the present exemplary embodiment, the above-described three types of signals are output to the detecting circuit 108a according to the present exemplary embodiment. The respective current detection mechanisms include a current voltage conversion circuit 122. According to the present exemplary embodiment, the current voltage conversion circuit 122 includes a transimpedance amplifier TA and a feedback resistance Rf. The bias power supply VVs is connected to a non-inverting input terminal of the transimpedance amplifier TA. One of the respective bias wirings Vs is connected to an inverting input terminal of the transimpedance amplifier TA. The feedback resistance Rf is connected to the transimpedance amplifier TA in parallel between the output terminal and the non-inverting input terminal. The respective current detection mechanisms according to the present exemplary embodiment also include a voltage amplification circuit 123 configured to amplify the output voltage of the current voltage conversion circuit 122. According to the present exemplary embodiment, the voltage amplification circuit 123 includes an instrumentation amplifier IA and a gain setting resistance Rg. The respective current detection mechanisms according to the present exemplary embodiment further include a band limitation circuit 124 for noise reduction and an AD converter 125 configured to perform an analog digital conversion and output respective digital current signals. According to this configuration, the bias wiring current detection mechanism 121 outputs the current signals obtained through the analog digital conversion on the currents flowing through the respective bias wirings into the voltage to be amplified and subjected to the band limitation and detects the currents flowing through the respective bias wirings.

The detecting circuit 108a includes a computation circuit 126 configured to compute the signal from the current detection circuit 120 and a comparison circuit 127 configured to compare the output (computation result) of the computation circuit 126 with a threshold Vth to output a comparison result 119a. The computation circuit 126 according to the present exemplary embodiment is configured to perform computation processing on three types of signals including the first bias wiring current signal 119b, the second bias wiring current signal 119c, and the third bias wiring current signal 119d. The comparison circuit 127 according to the present exemplary embodiment includes a comparator CMP configured to compare the output (computation result) of the computation circuit 126 with the previously set threshold Vth. A fixed voltage value previously set as the threshold Vth is used according to the present exemplary embodiment. It is noted that plural different thresholds are preferably prepared, and the plural thresholds correspond to the plural current detection mechanisms on a one-on-one basis. In the comparison circuit 127, a threshold corresponding to the selected bias wiring current detection mechanism 121 is more preferably selected among the plural thresholds in the viewpoint of detecting accuracy. This is because a wanted threshold may be employed in a case where a characteristic variation for each of the plural bias wiring current detection mechanisms 121, a characteristic variation for each of the plural bias wirings, and the like exist. The computation circuit 126 illustrated in Fig. 3 includes variable amplifiers VGA configured to amplify the respective bias wiring current signals by wanted amplification factors (coefficient) and a subtractor SUB configured to perform differential processing on the two bias wiring current signals among the respective amplified respective bias wiring current signals. The computation circuit 126 specifically includes the variable amplifier VGA configured to amplify the first bias wiring current signal 119b, the variable amplifier VGA configured to amplify the second bias wiring current signal 119c, and the variable amplifier VGA configured to amplify the third bias wiring current signal 119d. The computation circuit 126 further includes a subtractor SUB1 configured to perform differential processing on the amplified first bias wiring current signal 119b and the amplified second bias wiring current signal 119c and a subtractor SUB2 configured to perform differential processing on the amplified second bias wiring current signal 119c and the amplified third bias wiring current signal 119d. The computation circuit 126 further includes a first adder ADD1 configured to add the conductive power supply current signal 119d to a non-conductive power supply current signal 119e. The comparison circuit 127 illustrated in Fig. 3 includes a comparator CMP configured to compare the output of the subtractor SUB1 which is the computation result of the computation circuit 126 with the previously set threshold Vth and a comparator CMP configured to compare the output of subtractor SUB2 with the previously set threshold Vth. To improve the detecting accuracy, the comparison circuit 127 may also include an AND circuit configured to output a detecting signal on the basis of AND of the comparison results from the two comparators CMP. In a case where the detection speed is to be improved, an OR circuit may be used instead of the AND circuit. The comparison result 119a which is the detecting result of the detecting circuit 108a is supplied to the control circuit 108b, and the control circuit 108b performs the control on the drive circuit 102 on the basis of the comparison result 119a.
The description has been made while the signals obtained by converting the detected currents into the voltages are used in both the current detection circuit 120 and the detecting circuit 108a, but the embodiment of the present invention is not limited to this configuration. The current detection circuit 120 and the detecting circuit 108a according to the exemplary embodiment of the present invention may also use the detected currents without the conversion. To elaborate, it suffices if the current detection circuit 120 may detect the current flowing through the bias wiring Vs by outputting any signal.

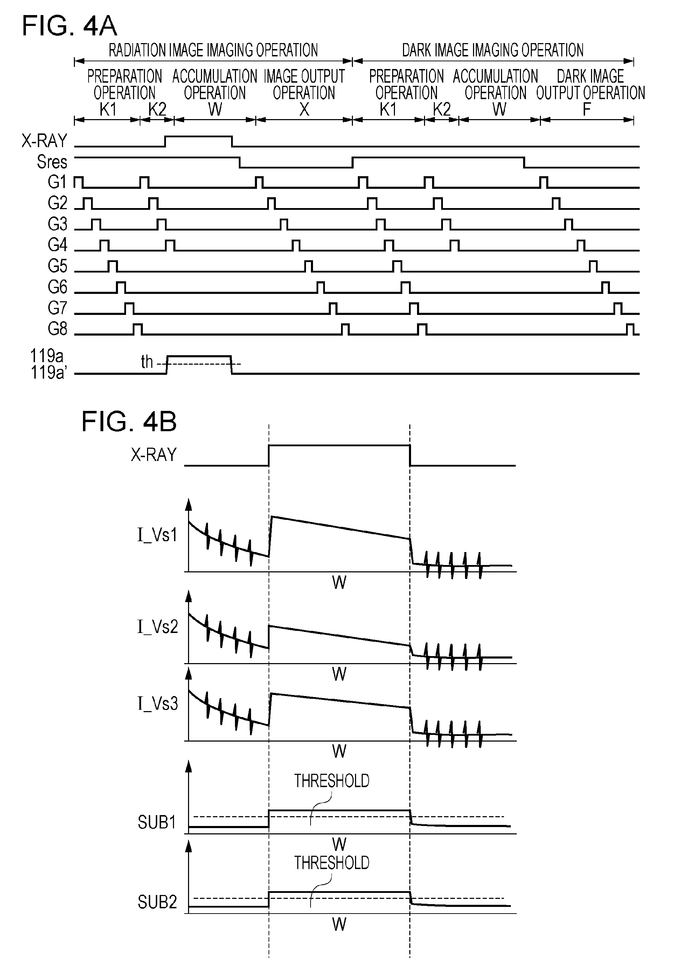

Detecting of radiation exposure and a control based on the detecting according to the present exemplary embodiment will be described next by using Fig. 2A, Fig. 3, Fig. 4A, and Fig. 4B. Fig. 4A is a timing chart for the entire radiation imaging apparatus, and Fig. 4B illustrates outputs of the current detection circuit 120 and the detecting circuit 108a.

In a radiation image imaging operation, the control unit 108 first supplies a control signal 117 to the power supply unit 107 and the current detection circuit 120. The power supply unit 107 and the current detection circuit 120 supply a bias voltage to the pixel array 101, supply a conductive voltage and a non-conductive voltage to the drive circuit 102, and supply respective reference voltages to the readout circuits 103. The control unit 108 supplies a control signal 118 to the drive circuit 102, and the drive circuit 102 outputs drive signals so that the conductive voltages are sequentially supplied to the respective driving wirings G1 to G8. An initialization operation K1 is conducted in which all the switch elements T are sequentially set in the conductive state in units of row, and the initialization operation K1 is conducted by plural times until the start of the radiation exposure is detected. At that time, the control unit 108 supplies the control signal 116b to the signal wiring reset switch SRes of the readout circuit 103 to set the signal wiring reset switch SRes as the conductive state. The first reference power supply VVref1 of the power supply unit 107 and the signal wiring Sig are set in the conductive state. The current detection circuit 120 detects the first bias wiring current I_Vs1 the second bias wiring current I_Vs2, and the third bias wiring current I_Vs3 during a preparation period including the initialization operation K1. The current detection circuit 120 then outputs the first bias wiring current signal 119b, the second bias wiring current signal 119c, and the third bias wiring current signal 119d to the detecting circuit 108a. The computation circuit 126 performs the above-described computation processing on the first bias wiring current signal 119b, the second bias wiring current signal 119c, and the third bias wiring current signal 119d. The comparison circuit 127 then compares the respective outputs of the computation circuit 126 with the respective thresholds to output comparison results 119a and 119a' to the control circuit 108b. When the output of the computation circuit 126 exceeds the threshold Vth, at least one of the comparison results 119a and 119b indicating that the radiation irradiation is started by the current detection circuit 120 and the detecting circuit 108a is output. Thus, the control circuit 108b supplies the control signal 118 to the drive circuit 102, and the supply of the conductive voltage to the driving wiring G by the drive circuit 102 is stopped. In Fig. 4A, the start of the radiation irradiation is detected when the conductive voltage is supplied from the drive circuit 102 to the driving wiring G4 in an initialization operation K2, and the supply of the conductive voltage to the driving wirings G5 to G8 by the drive circuit 102 is not conducted, so that all the switch elements T are maintained in the non-conductive state. According to this, the control is conducted in accordance with the start of the radiation irradiation at a time when the operation by the pixel array 101 is detected so that the initialization operation K2 is ended in the middle of the rows, and the operation by the radiation imaging apparatus 100 is shifted from a preparation operation to an accumulation operation W.

When the end of the radiation irradiation is detected while the output of the computation circuit 126 in the accumulation operation W is below the wanted threshold, the control circuit 108b supplies the control signal 118 to the drive circuit 102. The drive circuit 102 outputs the drive signals so that the conductive voltages are sequentially supplied to the respective driving wirings G1 to G8, and all the switch elements T are sequentially set in the conductive state in units of row. The radiation imaging apparatus 100 performs an image output operation X in which the electric signal in accordance with the emitted radiation is output from the pixel array 101 to the readout circuit 103. With the above-described processing, the radiation imaging apparatus 100 performs the radiation image imaging operation including the preparation operation, the accumulation operation W, and the image output operation X. An operation period of the initialization operation K1 herein is preferably shorter than an operation period of the image output operation X.

The radiation imaging apparatus 100 next performs a dark image imaging operation. The dark image imaging operation includes the preparation operation including the initialization operation K1 conducted once or more and the initialization operation K2, the accumulation operation W, and a dark image output operation F similarly as in the radiation image imaging operation. The radiation is not emitted in the accumulation operation W in the dark image imaging operation. In the dark image output operation F, the electric signal based on a dark-time output derived from a dark current generated in the conversion element S is output from the pixel array 101 to the readout circuit 103, and the operation itself of the radiation imaging apparatus 100 is the same as the image output operation X.

In a case where the radiation image imaging operation is conducted by plural times, the detecting of the start of the radiation irradiation based on the current detection which will be conducted afterwards in a radiation imaging operation according to the exemplary embodiment of the present invention may be affected by a residual image of the radiation irradiation conducted in the previous radiation image imaging operation. The residual image herein is generated while the charge based on the radiation irradiation conducted in the previous radiation image imaging operation among the radiation image imaging operations conducted by plural times affects the following radiation image imaging operation. Main causes of the residual image includes the charge trapped in a defect level and the charge that is not completed to be output and remains in the conversion element S. In a case where the charge remains in the conversion element S irradiated with the radiation, the charge is mixed into the current detected in the following radiation image imaging operation as noise and may decrease the detection accuracy in some cases.

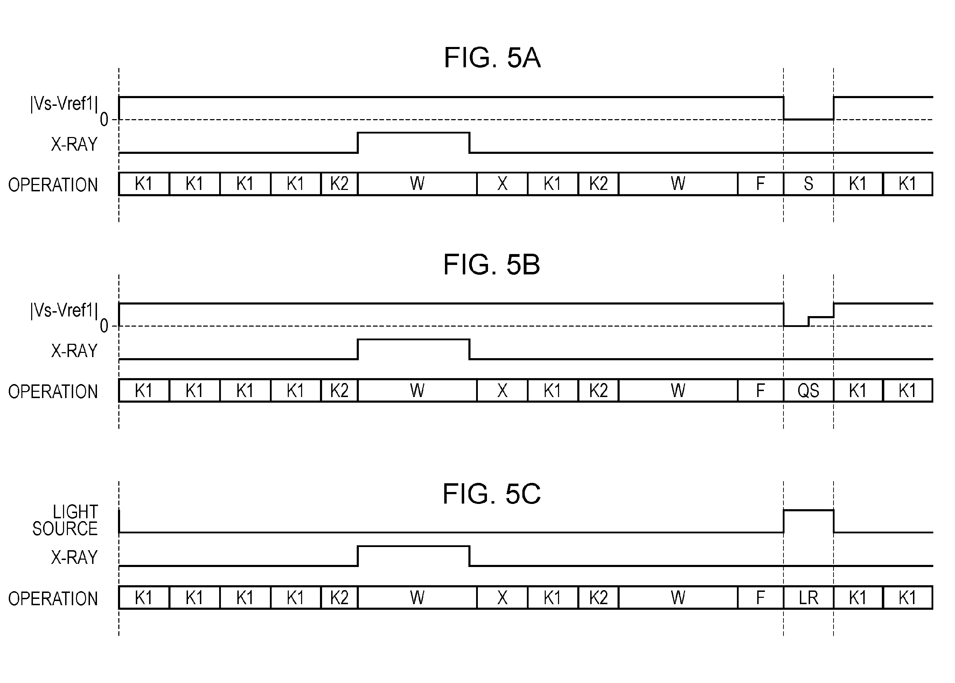

In view of the above, as illustrated in Figs. 5A to 5C, an operation of suppressing the residual image is preferably conducted in a period between the previous radiation image imaging operation and the following radiation image imaging operation. In a timing chart illustrated in Fig. 5A, after the dark image imaging operation following the previous radiation imaging operation, the next operation is conducted. A potential difference between the two voltages of the conversion elements (which will be referred to as voltage supplied to the conversion element S) is set as 0 V. Thus, the charge remaining in the conversion element S based on the radiation irradiation conducted in the previous radiation image imaging operation is suppressed. This operation is referred to as first residual image suppression operation or sleep operation S. After this sleep operation S is conducted, the following radiation image imaging operation is conducted. In a timing chart illustrated in Fig. 5B, after the dark image imaging operation following the previous radiation imaging operation, the next operation is conducted. Regarding the voltages supplied to the conversion element S, after a second voltage that is different from a first voltage supplied to the conversion element S in the radiation imaging operation is supplied, a third voltage that is different from the first and second voltages and also has an absolute value of a difference with the first voltage is smaller than an absolute value of a difference between the first voltage and the second voltage is supplied to the conversion element S. Thus, the charge remaining in the conversion element S based on the radiation irradiation conducted in the previous radiation image imaging operation is suppressed. In addition, as compared with the sleep operation illustrated in Fig. 5A, it is also possible to suppress the dark current that may be generated through the operation for suppressing the residual image. This operation is referred to as second residual image suppression operation QS. After this second residual image suppression operation QS is conducted, the following radiation image imaging operation is conducted. In a timing chart illustrated in Fig. 5C, after the dark image imaging operation following the previous radiation imaging operation, an operation of irradiating the pixel array 101 with light from a light source (not illustrated) provided in the radiation imaging apparatus 100 is conducted. Thus, the charge remaining in the conversion element S based on the radiation irradiation conducted in the previous radiation image imaging operation is suppressed. This operation is referred to as third residual image suppression operation LR. After this third residual image suppression operation LR is conducted, the following radiation image imaging operation is conducted. In the respective operations for suppressing the residual image described above, an operation similar to the above-described initialization operation K1 is more preferably conducted. Through these operations, it is possible to conduct the detecting of the start of the radiation irradiation at a satisfactory accuracy also in the following radiation image imaging operation.

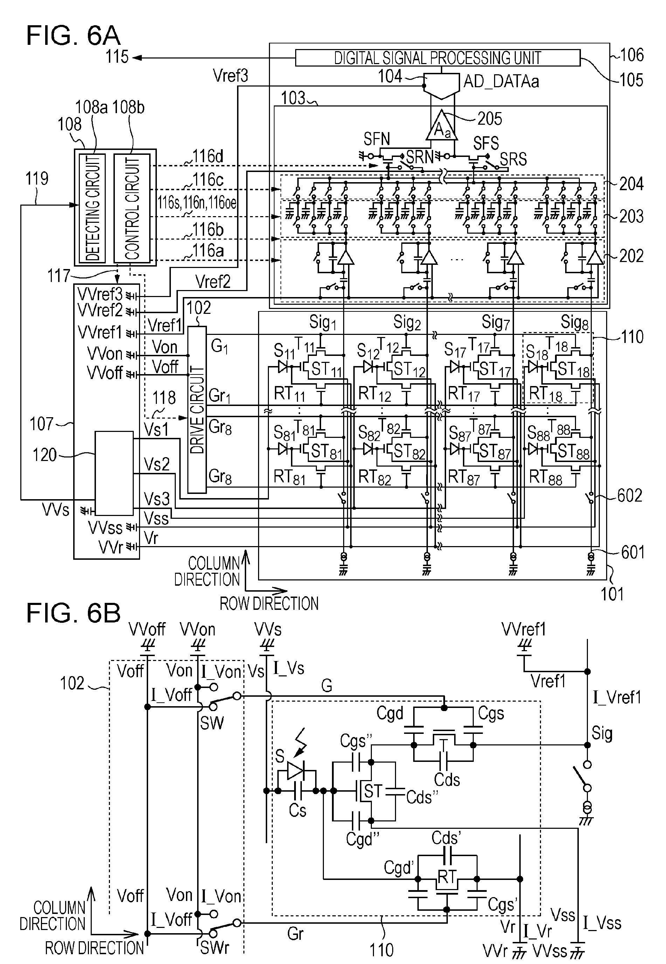

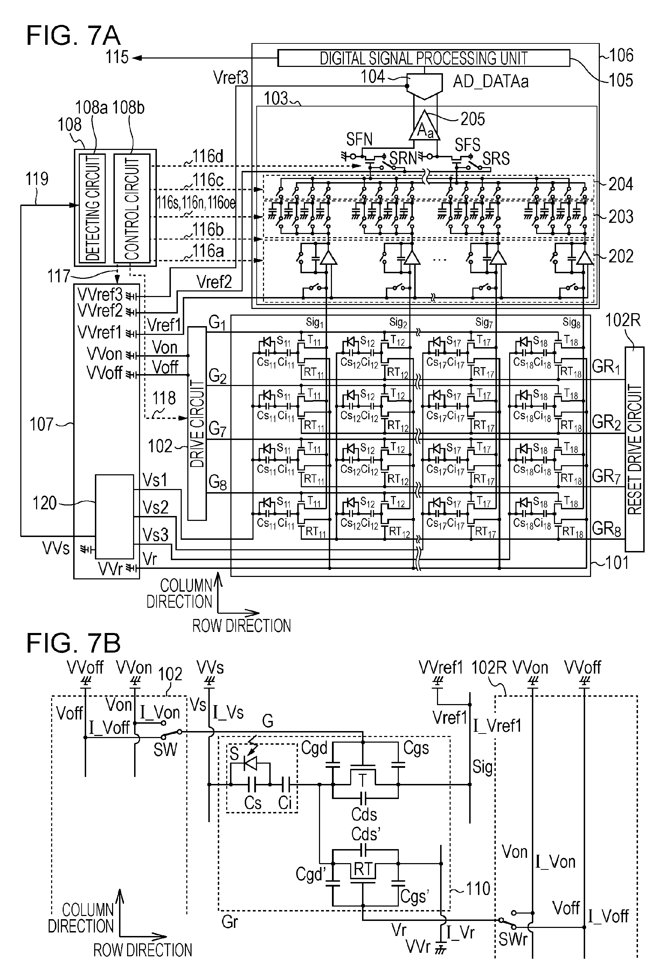

In Fig. 1B and Fig. 2A, the configuration including the conversion element S and the switch element T has been described as the single pixel configuration, but the embodiment of the present invention is not limited to this configuration. As illustrated in Fig. 6A and Fig. 6B, for example, in addition to the single pixel configuration illustrated in Fig. 1B and Fig. 2A, the pixel 110 may further include an amplification element ST and a reset element RT. In Fig. 6A and Fig. 6B, a transistor including a control terminal (gate electrode) and two main terminals is used for the amplification element ST. The control terminal of the transistor is connected to one of the electrodes of the conversion element S. One of the main terminals is connected to the switch element T. The other main terminal is connected to an operation power supply VVss that supplies an operation voltage via an operation power supply wiring VVs. A constant current source 601 is connected to the signal wiring Sig via a switch 602 and constitutes a source follower circuit with the amplification element ST. A transistor including a control terminal (gate electrode) and two main terminals is used for the reset element RT. One of the main terminals is connected to a reset power supply VVr via a reset wiring Vr. The other main terminal is connected to the control electrode of the amplification element ST. The reset element RT is equivalent to a second switch element according to the exemplary embodiment of the present invention, and a voltage of the reset power supply VVr is equivalent to a second voltage according to the exemplary embodiment of the present invention. The control electrode of the reset element RT is connected to the drive circuit 102 via the reset driving wiring Gr similarly as in the driving wiring G. Through a switch SWr provided to the drive circuit 102, the reset driving wiring Gr is selectively connected to the conductive power supply VVon via the conductive voltage wiring Von and to the non-conductive power supply VVoff via the non-conductive voltage wiring Voff. A clamp capacity is provided between the inverting input terminal of the operational amplifier A and the signal wiring reset switch SRes. As illustrated in Fig. 7A and Fig. 7B, for example, in addition to the single pixel configuration illustrated in Fig. 1B and Fig. 2A, the pixel 110 may further include the reset element RT. A transistor including a control terminal (gate electrodes) and two main terminals is used for the reset element RT. One of the main terminals is connected to the reset power supply VVr via the reset wiring Vr, and the other main terminal is connected to the control electrode of the amplification element ST. The reset element RT is equivalent to the second switch element according to the exemplary embodiment of the present invention, and a voltage of the reset power supply VVr is equivalent to the second voltage according to the exemplary embodiment of the present invention. The control electrode of the reset element RT is connected to a reset drive circuit 102R via the reset driving wiring Gr. Through the switch SWr provided to the reset drive circuit 102R, the reset driving wiring Gr is selectively connected to the conductive power supply VVon via the conductive voltage wiring Von or to the non-conductive power supply VVoff via the non-conductive voltage wiring Voff. In Fig. 7A and Fig. 7B, the conversion element S includes an MIS-type photoelectric conversion element.

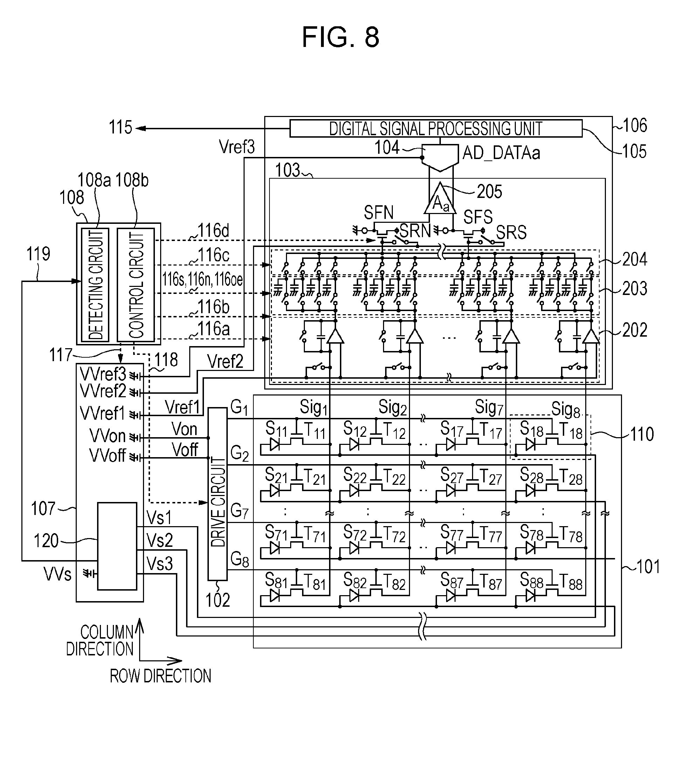

In Fig. 2A, the configuration has been described in which the respective bias wirings are connected to at least the conversion elements S of the plural pixels in the column direction, but the embodiment of the present invention is not limited to this configuration. As illustrated in Fig. 8, the respective bias wirings may be connected to at least the conversion elements S of the plural pixels in the row direction. By combining those configurations with each other, the respective bias wirings may be arranged in a grid in the pixel group. Furthermore, the configuration of Fig. 2A may be divided into two in the column direction, or the configuration of Fig. 8 may also be divided into two in the row direction.

Similarly as in the first pixel group, for example, the conversion elements S having a lower sensitivity than that of conversion elements S of the pixel group including the pixels 110 located in the center of the pixel array 101 are preferably provided in the pixel group including the pixels 110 located on an edge in the column direction of the pixel array 101. Examples of the conversion element having a low sensitivity with respect to the radiation, the radiation incident side of the conversion element S includes a conversion element including a radiation shielding member that shields the radiation and a conversion element including a light shielding member that shields light between the wavelength conversion body and the photoelectric conversion element for an indirect-type conversion element. Second Exemplary Embodiment

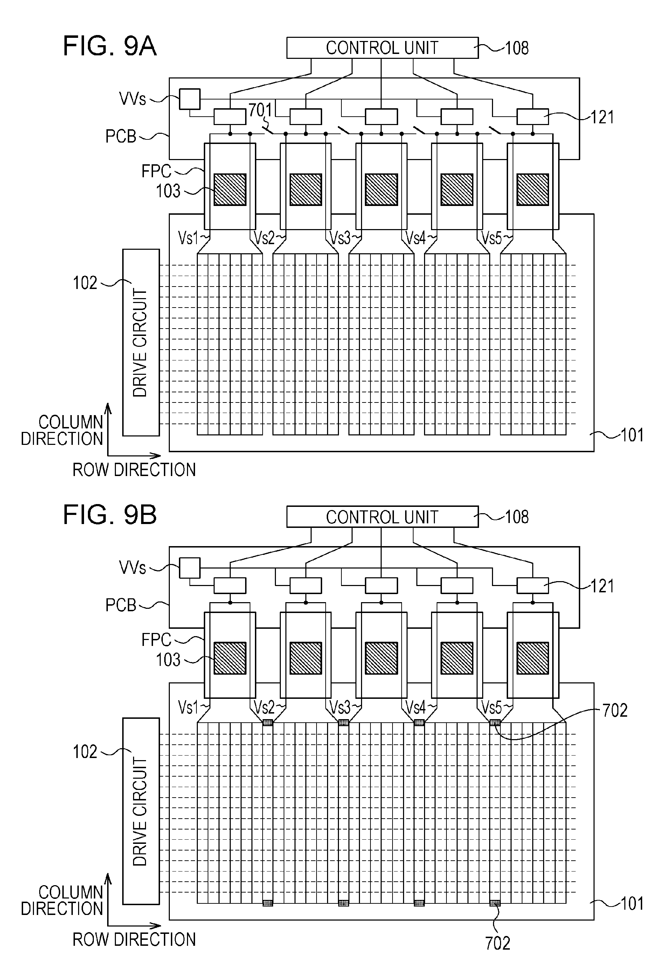

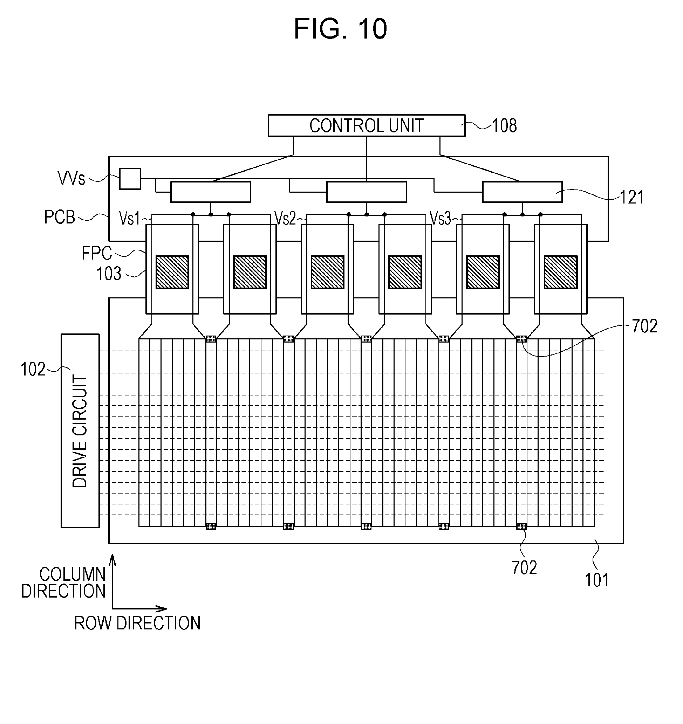

A radiation imaging apparatus according to a second exemplary embodiment of the present invention will be described by using Fig. 9A, Fig. 9B, and Fig. 10. Configurations that are same as the configurations described according to the first exemplary embodiment are assigned by the same reference signs, and a detailed description thereof will be omitted.

According to the present exemplary embodiment, the plural pixels 110 in the pixel array 101 are divided into the plural pixel groups, and the plural bias wirings are provided to correspond to the plural pixel groups. In examples illustrated in Fig. 9A and Fig. 9B, the plural pixels 110 in the pixel array 101 are divided into five pixel groups, and five bias wirings are provided to correspond to one pixel group on a one-on-one basis. The first bias wiring Vs1 is arranged for the first pixel group. The second bias wiring Vs2 is arranged for the second pixel group. The third bias wiring Vs3 is arranged for the third pixel group. The fourth bias wiring Vs4 is arranged for the fourth pixel group. The fifth bias wiring Vs5 is arranged for the fifth pixel group. In the example illustrated in Fig. 10, the plural pixels 110 in the pixel array 101 are divided into six pixel group. One bias wiring corresponds to two pixel groups. Thus, three bias wirings are arranged. The first bias wiring Vs1 is arranged for the first pixel group and the second pixel group. The second bias wiring Vs2 is arranged for the third pixel group and the fourth pixel group. The third bias wiring Vs3 is arranged for the fifth pixel group and the sixth pixel group.

According to the present exemplary embodiment, the plural readout circuits 103 are provided to correspond to the plural pixel groups. In the examples illustrated in Fig. 9A and Fig. 9B, the five readout circuits 103 are prepared to the respective pixel groups on a one-on-one basis. In the example illustrated in Fig. 10, the six readout circuits 103 are prepared to the respective pixel groups on a one-on-one basis.

According to the present exemplary embodiment, the respective readout circuits 103 are provided on flexible print circuit boards FPC. The plural bias wiring current detection mechanisms 121 constituting the current detection circuit 120, the bias power supply VVs, and the digital signal processing unit 105 (not illustrated in Fig. 9A and Fig. 9B) are provided on a print circuit boards PCB. The respective bias wiring current detection mechanisms 121 are connected to the control unit 108. In the examples illustrated in Fig. 9A and Fig. 9B, the five bias wiring current detection mechanisms 121 are prepared on the print circuit boards PCB with respect to the respective bias wirings on a one-on-one basis. In the example illustrated in Fig. 10, the three bias wiring current detection mechanisms 121 are prepared on the print circuit boards PCB with respect to the respective bias wirings on a one-on-one basis.

Ends on one side of the respective flexible print circuit boards FPC are mounted to a connection unit provided on an insulating substrate such as a glass substrate on which the pixel array 101 is arranged, and the respective readout circuits 103 are connected to the corresponding signal wirings Sig. The other ends of the respective flexible print circuit boards FPC is mounted to a wiring unit on the print circuit boards PCB, and the readout circuit 103 is connected to the digital signal processing unit 105. The respective bias wirings Vs are connected to the bias power supply VVs via the corresponding bias wiring current detection mechanism 121 and commonly connected to the second electrode of the conversion element S in the corresponding pixel group via the corresponding flexible print circuit board FPC.

With this configuration, with respect to the large-area pixel array 101 having a size of 43 cm × 35 cm or larger, for example, it is possible to provide the bias wirings Vs and the bias wiring current detection mechanisms 121 while appropriately corresponding to the respective pixel groups. As compared with a mode in which the common bias wiring Vs is provided for all the conversion elements S of the pixel array 101, it is possible to decrease the resistance and parasitic capacity of the bias wiring, so that the impedance of the bias wiring Vs may be decreased.

It is noted that the detecting of the bias wiring current I_Vs for detecting the start of the radiation irradiation may be conducted only in the initialization operation K1 and the initialization operation K2 described above. In the accumulation operation W, the image output operation X, and the dark image output operation F, image artifact may be generated because of a difference in potential at each bias wiring Vs may be generated. For that reason, as illustrated in Fig. 9A, a short-circuit switch 701 is provided between the respective bias wirings, and during an operation except for the initialization operation K1 and the initialization operation K2, the short-circuit switch 701 is preferably set in the conductive state. The control on the conductive state and the non-conductive state of the short-circuit switch 701 is conducted by the control unit 108 and may be more preferably conducted on the basis of the comparison result from the comparison circuit 127. As illustrated in Fig. 9B and Fig. 10, a resistance 702 having a wanted resistance value may connect the respective bias wirings. If the resistance value of the resistance 702 is higher than or equal to a resistance value at a part between the pixel array 101 and the flexible print circuit board FPC in the bias wiring Vs, the bias wiring current detection mechanism 121 may satisfactorily detect the bias wiring current I_Vs. The resistance 702 more preferably connects the respective bias wirings on a side opposite to the side where the readout circuit 103 of the pixel array 101 is connected.

The respective exemplary embodiments of the present invention may also be realized while a computer included in the control unit 108 or a control computer 140, for example, executes a program. A unit configured to supply the program to the computer, for example, a computer-readable recording medium such as a CD-ROM on which the program is recorded or a transmission medium such as the internet may also be applied to the exemplary embodiments of the present invention. The program may also be applied to the exemplary embodiments of the present invention. The program, the recording medium, the transmission medium, and the program product are included in the scope of the present invention. A technology based on a readily conceivable combination from the first and second exemplary embodiments is also in the scope of the present invention.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A radiation imaging apparatus comprising:
a pixel array (101) including a plurality of pixels (110) arranged in a matrix in which each pixel includes a conversion element (S) arranged to convert radiation into a charge and a switch element (T) arranged to transfer an electric signal based on the charge;
a bias wiring (Vs) arranged to supply the conversion element with a voltage;
power supply means (107) arranged to supply the voltage to the bias wiring; and
detecting means arranged to detect start of radiation irradiation to the pixel array, wherein:
the pixel array includes the plurality of pixels divided into a plurality of pixel groups;
the bias wirings are arranged to correspond to the plurality of pixel groups on a one-on-one basis; and
the detecting means includes a detecting circuit (108a) arranged to detect the start of the radiation irradiation to the pixel array on the basis of a comparison result through computation on at least two currents flowing through at least two bias wirings among the plurality of bias wirings.

2. The radiation imaging apparatus according to Claim 1, further comprising:
a drive wiring (G) arranged to supply the switch element (T) with a drive signal including a conductive voltage for setting the switch element as a conductive state and a non-conductive voltage for setting the switch element as a non-conductive state;
a drive circuit (102) arranged to supply the signal to the drive wiring;
a readout circuit (103) arranged to read out an image signal based on the electric signal transferred by the switch element; and
control means (108) configured to control the drive circuit and the readout circuit.

3. The radiation imaging apparatus according to Claim 2, wherein the detecting circuit includes a computation circuit (126) arranged to compute values of the at least two currents and a comparison circuit (127) arranged to compare an output of the computation circuit with a threshold to output a comparison result.

4. The radiation imaging apparatus according to Claim 3, wherein:
the detecting means further includes a current detection circuit (120) arranged to detect the at least two currents; and
the current detection circuit includes a plurality of current detection mechanisms (121a, 121b, 121c, 121) arranged to correspond to the plurality of bias wirings on a one-on-one basis.

5. The radiation imaging apparatus according to Claim 4, wherein the computation circuit is arranged to amplify at least one of signals from at least two current detection mechanisms among the plurality of current detection mechanisms to be subjected to differential processing so that a component in accordance with a potential difference between the conductive voltage and the non-conductive voltage included in the output of the computation circuit is below the threshold.

6. The radiation imaging apparatus according to Claim 5, further comprising:
a switch (602) provided between the plurality of bias wirings,
wherein the control means is arranged to control a conductive state and a non-conductive state of the switch (602) on the basis of the comparison result from the comparison circuit.

7. The radiation imaging apparatus according to Claim 5, further comprising:
a plurality of flexible print circuit boards (FPC) each including the readout circuit; and
a resistance (702) provided between the plurality of bias wirings, wherein:
each of the plurality of bias wirings is commonly connected to the plurality of conversion elements in a corresponding pixel group among the plurality of pixel groups via a corresponding flexible print circuit board among the plurality of flexible print circuit boards; and
a resistance value of the resistance is higher than or equal to a resistance value at a part between the pixel array and the flexible print circuit board on the bias wiring.

8. The radiation imaging apparatus according to any one of Claims 1 to 7, wherein:
the pixel further includes a second switch element (RT) arranged to supply a second voltage (Vr) that is different from the voltage (Vs) supplied to the conversion element (S) separately from the switch element (T); and
the power supply means (107) is arranged to supply the second voltage to the second switch element.

9. The radiation imaging apparatus according to Claim 8, wherein:
the pixel further includes an amplifier element (A) arranged to output the electric signal having the charge amplified between the switch element and the conversion element to the switch element; and
the power supply means is arranged to supply the amplification element with an operation voltage for the amplification element to operate.

10. A radiation imaging system comprising:
the radiation imaging apparatus according to any one of Claims 1 to 9; and
a radiation generation apparatus (130) arranged to emit radiation.

11. A control method for a radiation imaging apparatus including that includes a pixel array (101) including a plurality of pixels (110) arranged in a matrix in which each pixel includes a conversion element (S) arranged to convert radiation into a charge and a switch element (T) arranged to transfer an electric signal based on the charge, a bias wiring (Vs) arranged to supply the conversion element with a voltage for the conversion element to convert the radiation into the charge, and power supply means (107) arranged to supply the voltage to the bias wiring, in which the pixel array includes the plurality of pixels divided into a plurality of pixel groups, and the bias wirings are provided to correspond to the plurality of pixel groups on a one-on-one basis, the control method comprising:
detecting radiation irradiation to the pixel array on the basis of a comparison result through computation on at least two currents flowing through at least two bias wirings among the plurality of bias wirings; and
controlling an operation of the drive circuit in accordance with the detected radiation irradiation.

12. The control method for the radiation imaging apparatus according to Claim 11, wherein the radiation irradiation to the pixel array is detected by comparing a computation output of values of the at least two currents with a previously set threshold.

13. The control method for the radiation imaging apparatus according to Claim 12, wherein the radiation irradiation to the pixel array is detected by comparing the computation output of the values of the at least two currents with a threshold selected from a plurality of previously set thresholds.
